# EUROPEAN PATENT SPECIFICATION

(11) **EP 0 385 508 B1**
(45) Date of publication and mention of the grant of the patent: **21.06.1995**
(21) Application number: 90104126.9
(22) Date of filing: 02.03.1990
(51) Int. Cl.: G09G 1/14, G06K 15/02, G06T 1/00, G06F 3/12

(54) **Device for generating dot pattern data**
Anordnung zur Erzeugung von Matrix-Zeichenmustern
Dispositif de génération de formes de caractères matriciels

(30) Priority: 03.03.1989 JP 51413/89; 10.03.1989 JP 58910/89; 07.03.1989 JP 54230/89; 22.12.1989 JP 333626/89
(43) Date of publication of application: 05.09.1990
(73) Proprietor: SEIKO EPSON CORPORATION, Shinjuku-ku Tokyo-to (JP)
(72) Inventor: Matsuhira, Masatoshi, c/o Seiko Epson Corporation, Suwa-shi, Nagano-ken (JP)
(74) Representative: Hoffmann, Eckart, Dipl.-Ing.

(56) References cited:
- EP-A- 0 100 872
- EP-A- 0 177 704
- EP-A- 0 215 664
- GB-A- 2 110 058

## Description

### BACKGROUND OF THE INVENTION:

The present invention is directed to a device for converting character code signals inputted from an external unit such as a computer into graphics or characters formed of dot aggregations.

A serial printer is designed to effect a printing process by disposing a plurality of ink nozzles, exothermic elements or wires on a printing head and then reciprocating a carriage mounting the printing head over a recording medium. A laser printer is arranged to transfer a toner by performing a writing process to a photosensitive material drum with laser beams. These serial and laser printers in principle print the characters and graphics by use of aggregations of hyperfine dots and therefore require a device for generating dot pattern data for converting character code signals into dot patterns. A typical arrangement of such a dot pattern data generating device is that a storage means stores the characters specified by the character codes in the form of dot data whose expressions are based on the existence or non-existence of the dots, corresponding to the character codes, so as to be readable in accordance with character code data.

In some cases, there are needed not only characters of the standard size but also characters of a larger size than the standard size depending on contents of documents during the printing operation. In order to meet such a requirement, a common practice is to store even the dot patterns which express the characters having the larger size into the storage means.

However, storing into the storage means the dot patterns of an enlarged size which are not oft-used brings about a rise in costs of the device because of requiring a storage circuit having a large capacity.

For the purpose of eliminating the foregoing problem, there was proposed a so-called outline font, i.e., a method involving the steps of storing the character pattern data of the standard size in the form not of dot data but outline data which represent outlines of the standard size characters, enlarging the outline data up to desired size outlines by means of an arithmetic unit during execution of printing and converting the outlines into the dot data. Based on this method, an amount of data to be stored is small, and hence a storage capacity can be reduced. While on the other hand, it requires a good deal of arithmetic operations for converting the outline data into the dot data, which in turn leads to such problems that it takes a long period of time for printing or needs an arithmetic means having a high performance.

With a view to obviating those problems, there was proposed a method of multiplying each dot into a plurality of dots corresponding to a multiplying factor by use of a standard size character dot pattern. To be specific, the proposed method is that in the case of a 4-fold enlargement, one dot of the standard size dot pattern is converted into four pieces of dots.

This method has an advantage in which the dot patterns of the enlarged characters can be generated at a high velocity by simple arithmetic operations without increasing the storage capacity. At the same time, there arises a problem in that even stepped portions shaping oblique lines are enlarged at the multiplying factor, resulting in a decline of character quality.

A method was proposed to solve this problem, the arrangement being such that modifications are made to smooth the oblique line patterns by increasing or decreasing the dots which form the oblique lines of the character dot patterns.

According to the invention disclosed in Japanese Patent Application Laid-Open JP-A-60-014286, there is disclosed a dot pattern data generating device incorporating a function to modify the dot patterns in smooth configurations. In accordance with the invention disclosed therein, each of dots representing the standard character dot pattern is multiplied into a corresponding number of dots at the multiplying factor, and a dot pattern for enlarging the character is generated. On the other hand, the storage means stores all the patterns of the stepped portions of the oblique lines which are shaped when being enlarged and modifying patterns thereof in a dictionary format. The dot pattern outlines of the enlarged characters which are generated in the previous step are to be cut out for replacement with the modifying patterns corresponding thereto.

There is caused, however, a problem wherein it requires much time till optimal modifying patterns are outputted, because of reading the modifying patterns by a so-called mask pattern matching retrieve method based on the step of comparing the outline dot patterns with mask patterns prepared beforehand.

An additional inconvenience is that a shape balance of the character as a whole is lost due to partial swellings or the thins, although the smoothness of the outline patterns can be attained because of the uniform replacement with the modifying patterns.

The document EP-A-0 177 704 discloses a smoothing device for an image display. In this prior art, for smoothing a slanted line pattern to be displayed on a display device the slanted line pattern is detected using the pattern data of eight pixels surrounding a current display pixel. If the pattern data of the surrounding pixels meet predetermined conditions, either a half pixel is added or deleted from the display. As a matter course, this known smoothing device is operable only in combination with a display device capable of displaying half pixels.

The document EP-A-0 100 872 discloses an apparatus and a method for enlarging character patterns. In this prior art a plurality of characters of ordinary size is stored in the form of dot or pixel pattern data in a first memory. For enlarging the characters, each pixel of the ordinary sized pattern is multiplied to four or more pixels of an enlarged pattern, depending on the magnification rate. For smoothing stepped portions in the enlarged pattern, square-shaped subpatterns of the ordinary sized pattern, each comprising four pixels, are successively read and converted into a four bit word of which each bit corresponds to one of the four pixels. The four bit word together with the magnification rate is used for addressing a second memory to read a prestored enlarged subpattern corresponding to one of the pixels of the subpattern of the ordinary sized pattern. This prior art requires a substantial amount of capacity for the second memory since for each combination of pattern data of those square-shaped subpatterns a corresponding enlarged subpattern must be prestored irrespective of whether the subpattern of the ordinary sized pattern represents a stepped portion or not.

### SUMMARY OF THE INVENTION

The first object of the present invention is to provide a novel dot pattern data generating device capable of modifying stepped portions of oblique lines of dot patterns for enlargement characters at a high velocity which are generated from dot patterns of standard size characters.

The second object of the invention is to provide a dot pattern data generating device capable of keeping a shape balance of the enlarged character as a whole by properly changing a mode of a smoothing process in accordance with types of characters.

These objects are achieved with a device as claimed.

### BRIEF DESCRIPTION OF THE DRAWINGS:

Other objects and advantages of the present invention will become apparent during the following discussion taken in conjunction with the accompanying drawings, in which:
FIG. 1 is a block diagram illustrating an outline of data processing in a printer to which a dot pattern data generating device of the present invention is applied;
FIG. 2 is a block diagram showing a first preferred embodiment of the dot pattern data generating device;
FIG. 3 is a diagram showing an example of dot pattern data which constitute a character of a standard size;
FIG. 4 is a diagram of assistance in explaining an arithmetic operation of an X-value/Y-value arithmetic circuit used for the dot pattern data generating device of the invention;
FIGS. 5(a) through 5(d) and FIGS. 6(a) through 6(d) are diagrams each depicting an example of a dot pattern shaping an oblique line of the character pattern;
FIGS. 7(a) through 7(d) and FIGS. 8(a) through 8(d) are diagrams illustrating dot patterns outputted when enlarging the dot patterns of readout central coordinates of FIGS. 5(a) through 5(d) and FIGS. 6(a) through (d);
FIGS. 9 to 12 are flowcharts showing operations of the device depicted in FIG. 2;
FIG. 13 is a diagram depicting a partial pattern cut out from the standard size pattern by means of a region readout circuit;
FIG. 14 is a block diagram showing a second embodiment of the dot pattern data generating device of the invention;
FIGS. 15(a) through 15(d) are diagrams each illustrating a dot pattern which forms an oblique line of the character pattern;
FIGS. 16(a) to 16(d) are diagrams showing dot patterns outputted when enlarging the dot patterns of the readout central coordinates of FIGS. 15(a) through 15(d);
FIGS. 17 to 20 are flowcharts each showing the operations of the dot pattern data generating device depicted in FIG. 14;
FIG. 21 is a block diagram showing a third embodiment of the dot pattern data generating device of the invention; and
FIGS. 22 and 23 are flowcharts showing the operations of the dot pattern data generating device depicted in FIG. 21.

### DESCRIPTION OF THE PREFERRED EMBODIMENTS:

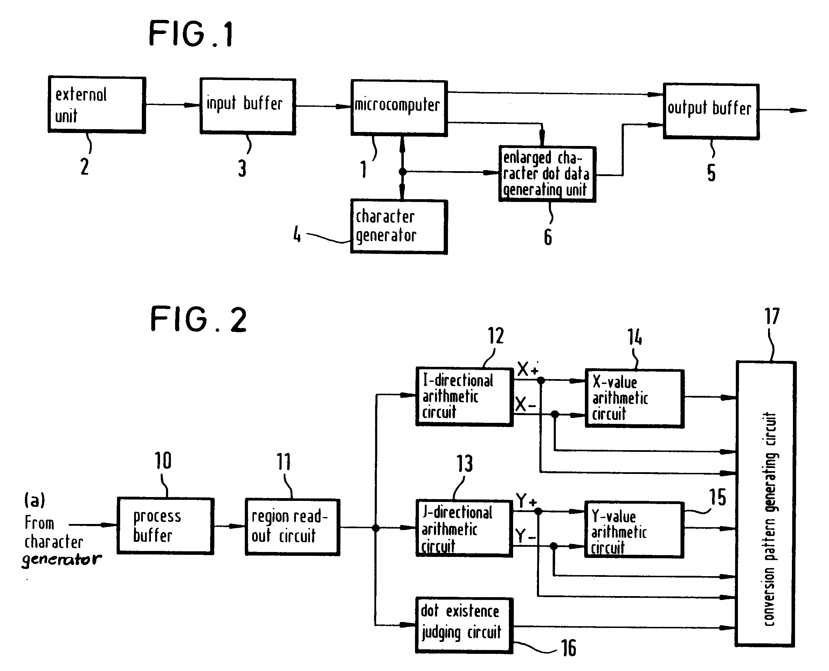

Turning first to FIG. 1, there is illustrated an outline of a dot pattern data generating device according to the present invention. Designated at 1 is a microcomputer composed of a central arithmetic processing unit, a RAM and a ROM and programed to permit a printing mechanism to print dot data of a character generator 4 by reading the dot data directly to an output buffer 5 when printing standard size characters after judging character code data outputted from an external unit 2 such as a computer to an input buffer 3 and to output signals for actuating an enlarged character dot data generating unit 6 when printing enlarged size characters.

The character generator 4, into which the characters corresponding to character codes specifying at least the standard size are stored as dot data expressed by dot aggregations, is so constructed as to be readable in accordance with the character code data given from the outside.

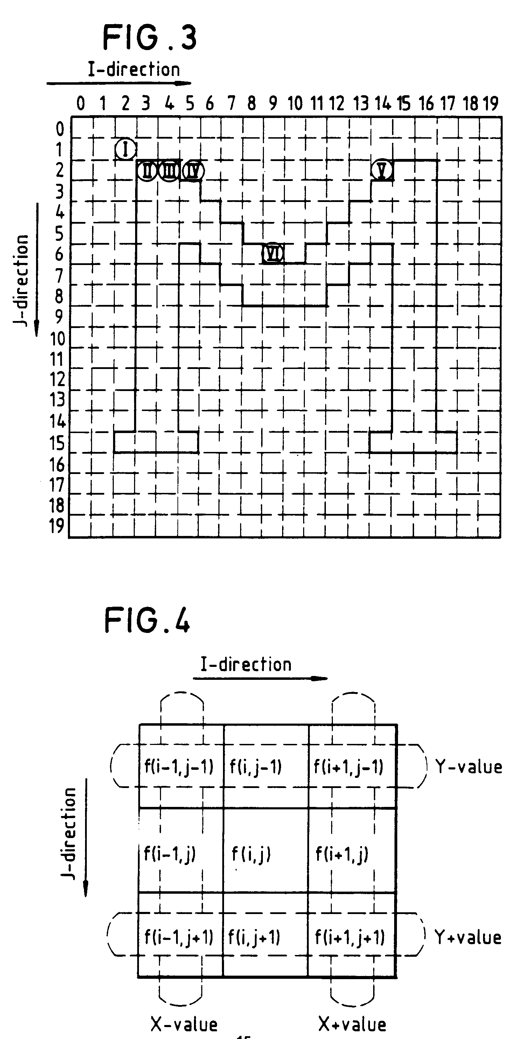

FIG. 2 depicts the above-mentioned enlarged character pattern data generating unit. A process buffer generally indicated at 10 in the Figure is arranged to store the dot data of the standard size characters read by the microcomputer 1 from the character generator 4 when specifying a printing process of the enlarged size characters in accordance with the character code data. A region readout circuit 11 is intended to sequentially cut out the standard size dot data (FIG. 3) read to the processing buffer 10 by (n x n) dots, i.e., (3 x 3) dots in this embodiment to surround readout central coordinates while moving the central coordinates dotwise from one end of a pattern address, viz., the left upper corner to the right lower corner in FIG. 3. For convenience of the explanation, the readout central coordinate is expressed by (i, j); the left from the central coordinate in the Figure is prescribed such as (i-1); the right is (i+1); the upper is (j-1); and the lower is (j+1). A relationship of f(i+k, j+ℓ) =1 is prescribed, if dot existence data are present in coordinates (i+k, j+ℓ) of the read pattern. If no dot exists or null data are present, a relationship of f(i+k, j+ℓ) = 0 is prescribed.

An I-directional arithmetic circuit 12, as illustrated in FIG. 4, computes values of three j-directional coordinates [(i-1, j-1), (i-1, j), (i-1, j+1)] and of additional three coordinates [(i+1, j-1), (i+1, j), (i+1, j+1)], namely, f(i-1, j-1) + f(i-1, j) + f(i-1, j+1) = X- and f(i+1, j-1) +f (i+1, j) f(i+1, j+1) = X+. The circuit 12 then outputs the arithmetic results.

A J-directional arithmetic circuit 13 computes three I-directional coordinates [(i-1), j-1), (i, j-1), (i+1, j-1)] and of additional three coordinates [(i-1, j+1), (i, j+1), (i+1, j-1)], namely f(i-1, j-1) + f (i, j-1) +f (i+1, j-1) =Y- and f (i-1, j+1) + f(i, j+1) + f(i+1, j+1) =Y+. The circuit 13 then outputs the arithmetic results.

An X-value arithmetic circuit 14 serves to output a difference between a value X+ and a value X-, which is given by X = X+ - X-. A Y-value arithmetic circuit 15 outputs a difference Y between a value Y+ and a value Y-, which is given by Y = Y+ - Y-. A dot existence judging circuit 16 judges the existence and non-existence of dots at the readout central coordinate (i, j). The circuit 16 outputs "1" when the dot existence data are present and "0" when the null data are present.

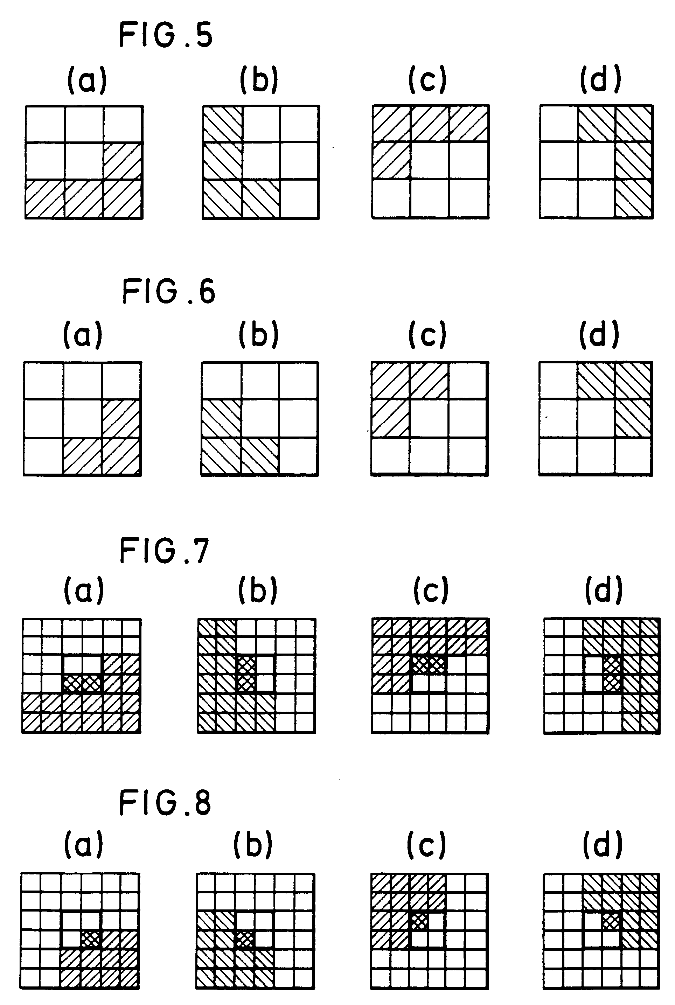

Where the character pattern is expressed by dot aggregations, the oblique lines contain the stepped portions which exert influences on the quality of printed characters, and hence an object for modification includes the patterns depicted in FIGS. 5(a) through 5(d), the patterns which exhibit a linear symmetry or a point symmetry with respect thereto, the patterns depicted in FIGS. 6(a) through 6(d) and the patterns which show the linear symmetry or the point symmetry with respect thereto.

For this reason, when generating the patterns of the enlarged characters, the arrangement is not that null areas contiguous to the dots of the stepped portions are simply quadrupled to fill up the stepped portions but that in the patterns of the stepped portions shown in FIG. 5, smooth oblique lines can be shaped by replacing the pattern of the readout central coordinate by a pattern indicated by a frame of a heavy line of FIG. 7, and in the stepped portion patterns illustrated in FIG. 6, the null data of the readout central coordinate by the pattern to which dots (indicated by double hatching in FIGS. 7 and 8) framed by heavy lines of FIG. 8 are supplemented.

A conversion pattern generating circuit 17 judges types, shown in FIGS. 5(a) through 5(d) and FIGS. 6(a) through 6(d), of the standard size null data to be converted on the basis of the data given from the I-directional arithmetic circuit 12, the X-value arithmetic circuit 14, the Y-value arithmetic circuit 15 and the dot existence judging circuit 16. Based on these judgment results, the conversion pattern generating circuit 17 generates one pattern of those shown in FIGS. 7(a) through 7(d) and FIGS. 8(a) through 8(d). The conversion pattern can be stored beforehand into the storage circuit in the dictionary format or generated by the arithmetic circuit.

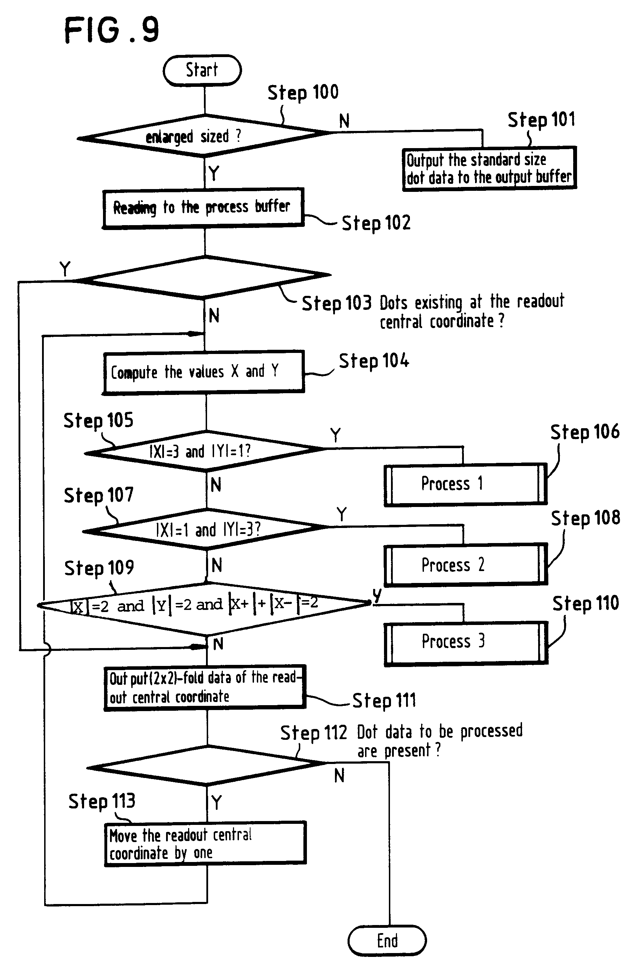

The operations of the thus constructed device will hereinafter be described in conjunction with flowcharts of FIGS. 9 to 11.

If the character code data outputted from the external unit 2 command a standard size print (step 100), the microcomputer 1 accesses the character generator 4 on the basis of the character code data stored into the input buffer 3 and reads out the standard size dot data corresponding to the character codes to the output buffer 5 (step 101). On the basis of the dot data, dot forming elements are operated, thereby printing the standard size characters according to the dot pattern.

On the other hand, if the character code data outputted from the external unit 2 command a print of a size which is, e.g., four times as large as the standard size (step 100), the microcomputer 1 reads out the standard size dot data corresponding to the character codes from the character generator 4 to the process buffer 10 (step 102). From the process buffer 10, the region readout circuit 11 reads the data of(3 x 3) dots with the coordinate (i, j) being centered while deviating the readout coordinate dotwise in the right direction in a predetermined order, for instance, from the left upper corner defined by (i, j) = (0, 0) (FIG. 3).

Where the readout central coordinate is present at the left upper corner, "0" comes because of non-existence of the dots. Therefore, signals "0" are outputted from the dot existence judging circuit 16 (step 103). That no dot is present at the readout central coordinate implies a possibility of being the null data contiguous to the dots shaping an oblique line. The X-value arithmetic circuit 14 and the Y-value arithmetic circuit 15 compute values X and Y (step 104). In this case, the values of f(i-1, j-1) + f(i-1, j) + f(i-1, j+1) = X- and f(i+1, j-1) + f(i+1, j) f(i+1), j+1) = X+ are "0", and the values of f(i-1, j+1) + f(i, j+1) + f(i+1, j+1) = Y+ are "0". Hence, the X-value arithmetic circuit 14 and the Y-value arithmetic circuit 15 output the values "0". For this reason, since this does not correspond to the steps 105, 107 and 109, a conversion pattern generating circuit 17 jumps over to a step 111, wherein the circuit 17 outputs, to the output buffer (FIG. 1), the dot data of the readout central coordinate, i.e., in this case (2 x 2) pieces of null data "0", namely, "0" of two lines each consisting of two pieces of data (step 111). As a result, the data constituting the readout central coordinate (0, 0) are converted into (2 x 2) pieces of null data, and it follows that the data are enlarged four times.

The dot data are still left in this case (step 112), so that the readout central coordinate is moved by one address in the I-direction from the process buffer 10 (step 113), and the above-mentioned steps are repeated. In the standard size character pattern depicted in FIG. 3, the values X and Y are identical with the above-described ones up to a coordinate (2, 1). Therefore, the conversion pattern generating circuit 17 outputs the null data of the readout central coordinate (0, 0) and the coordinate (1, 1) after simply quadrupling the null data.

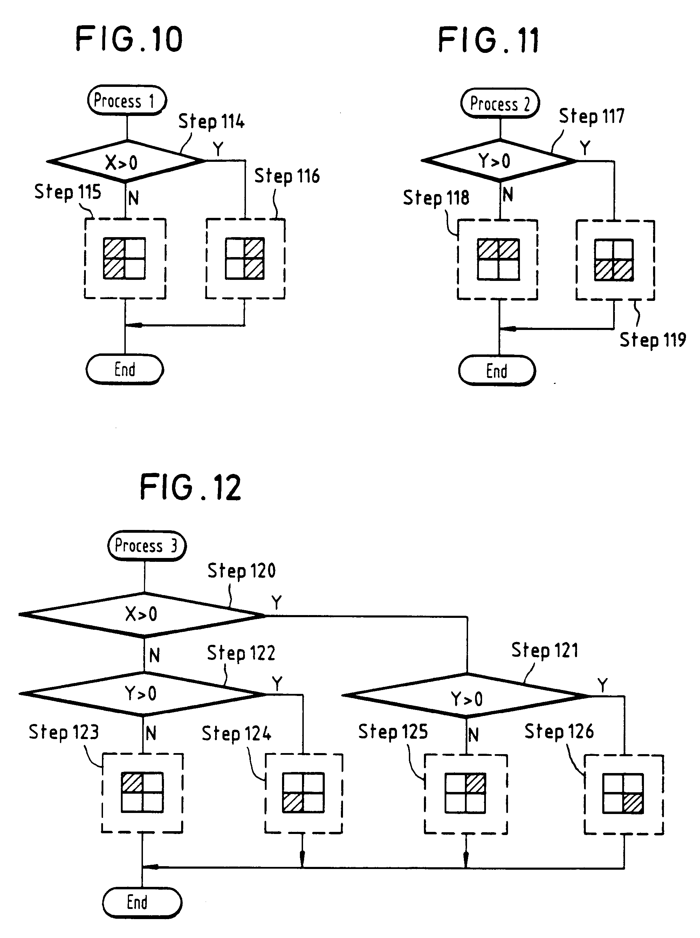

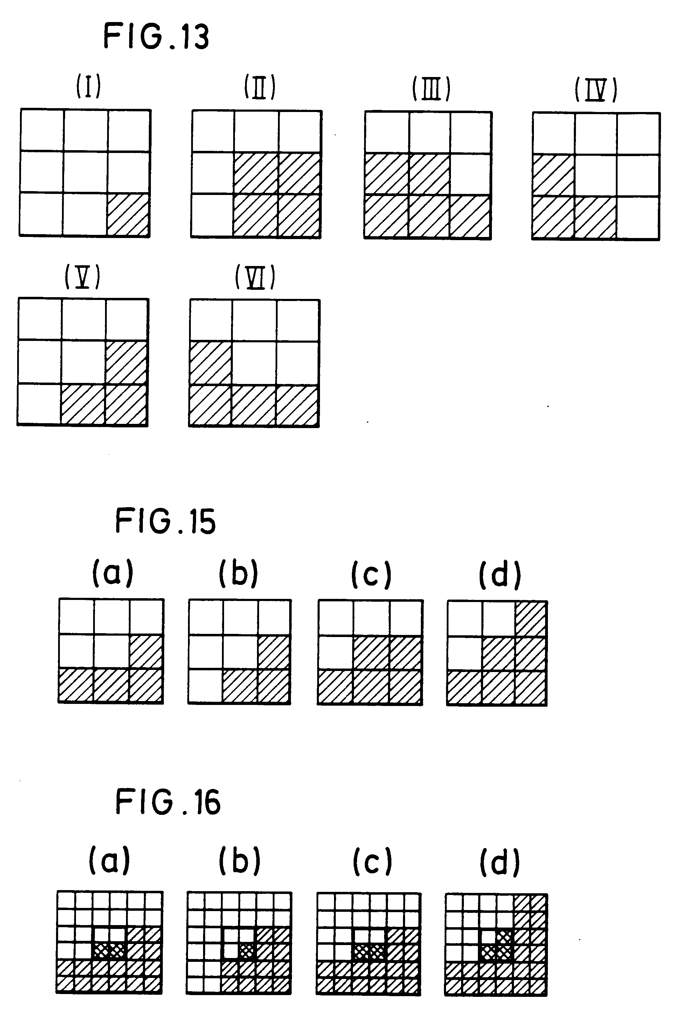

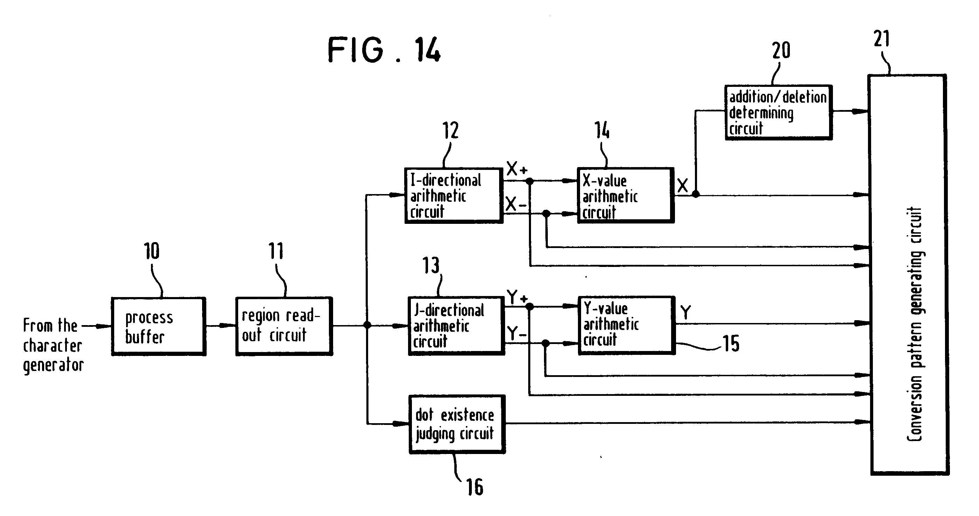

When the readout central coordinate moves to (i, j) = (2, 1) in this manner (I in FIG. 3), the region readout circuit 11 outputs a pattern including dot existence data "1" at the right lower end shown in FIG. 13(I). This pattern, in which the value is "1" and the value Y is "1", does not correspond to the steps 105, 107 and 108. The conversion pattern generating circuit 17 therefore outputs the data corresponding to the data of the dot existence judging circuit 16, viz., (2 x 2)-fold null data in this case (step 110). Until the readout central coordinate thus moves to (4, 2), the dot data of the readout central coordinate continue to be "0". However, since any requirement of the steps 104, 107 and 109 is not satisfied, it follows that the conversion pattern generating circuit 17 outputs the (2 x 2)-fold null data. When the readout central coordinate moves to (4, 2) or (4, 3) (II and III in FIG. 3), the region readout circuit 11 cuts out the patterns shown in FIGS. 13(II) and 13(III). These patterns have the dot existence data "1" at the respective readout central coordinates (step 103), and hence the conversion pattern generating circuit 17 jumps over to a step 111, wherein the circuit 17 outputs (2 x 2)-fold dot existence data "1" which coincide with the judgment results of the dot existence judging circuit 16. When the readout central coordinate (i, j) shifts to (5, 2) (FIG. 3IV), the region readout circuit 11 cuts out the pattern depicted in FIG. 13 (IV). Originally, the dots do not exist at the readout central coordinate of this pattern, so that the conversion pattern generating circuit 17 refers to the values and Y (step 104). In this pattern the value thereof is "-2", while the value Y is "2", and a relationship of |X-| + |X+| = 2 is established (step 109). Consequently, the program proceeds to a process 3 which is fully described in FIG. 12 (step 110). In this pattern, the value is negative (step 120), whereas the value Y is positive (step 122). The conversion pattern generating circuit 17 outputs the pattern of a step 124, i.e., data including the dot existence data at the left lower corner.

In consequence of the foregoing steps, the null data contiguous to the stepped portion depicted in FIG. 6(b) are converted into a pattern shown in FIG. 8(b). One dot is added to a portion which has hitherto been converted into a (2 x 2) null area, thereby a dot pattern representing a smooth oblique line is obtained.

The pattern judgment is made by sequentially moving the readout central coordinate from (6, 2) up to (13, 2). As a matter of course, on this route the requirements of the steps 105, 107 and 109 can not be fulfilled, and therefore the conversion pattern generating circuit 17 outputs the (2 x 2) null data. When the readout central coordinate (i, j) moves to (14, 2) (FIG. 3V), in a pattern (FIG. 13V) given from the region readout circuit 11, the value is "2", while the value Y is "2", and a relationship of |X-| + |X+| = 2 is valid. Hence, the conversion pattern generating circuit 17 selects the process 3 by the step 108 (step 109). When entering the process 3, the value R is positive (step 120), and the value Y is also positive (step 121), so that a pattern of a step 126 is selected. A stepped portion depicted in FIG. 6(a) is converted into that of FIG. 8(a), thus generating a smooth dot pattern.

The conversion pattern generating circuit 17 converts null data (6, 3), (7, 4), (8, 5) and (13, 3), (12, 4), (11, 5) which verge on the stepped portions into the data of a step 124 or 126 which, as explained earlier, consist of a single piece of dot existence data and three pieces of null data.

When the readout central coordinate shifts to (9, 6) (FIG. 3VI), a pattern illustrated in FIG. 13VI is read from the region readout circuit 11. In this pattern, the value X is "-1", while the value Y is "3". The conversion pattern generating circuit 17 then selects a pattern of a step 119, because of the value Y being positive (step 117), while shifting the process of the step 107 to a process 2 (FIG. 11) of the step 108.

If the readout central coordinate is the null data "0", and when verging on the dot existence data "1", the operation is not that the null data is simply quadrupled but that any one of those shown in FIGS. 5(a) though 5(d) and 6(a) through 6(d) is recognized by the steps 103 to 126. Based on this judgement result, the patterns of the steps 115, 116, 118, 119, 123 through 126 are selected, and the patterns in which the dots are supplemented to null areas are outputted.

Originally, as a judgment of a pattern mode of these null areas is executed by a numerical value arithmetic operation, there is attained very high-speed processing as compared with a pattern matching method which involves the use of a pattern mask.

FIG. 14 shows a second embodiment of the dot pattern data generating device of the invention. In the device shown in the first embodiment, if the stepped portion is present, a conversion pattern in which the dot data is added to the null area contiguous to the stepped portion is generated. Whereas in the second embodiment, the addition or deletion of the dots can be regulated depending on the conditions.

An addition/deletion determining circuit 20 is arranged to select the deletion or addition of the dots to the null data verging on the stepped portion.

The conversion pattern generating circuit 21 detects the patterns depicted in FIGS. 15(a) through 15(d) and the patterns which exhibit a point symmetry and linear symmetry with respect thereto among the dot patterns which shape the oblique lines on the basis of the data sent from the I-directional arithmetic circuit 12, the X-value arithmetic circuit 14, the Y-value arithmetic circuit 15, the dot existence judging circuit 16 and the addition/deletion determining circuit 20. Subsequent to this step, the circuit 21 converts the thus detected patterns into patterns framed by heavy lines in FIGS. 16(a) to 16(d) and into patterns which show the point symmetry and linear symmetry with respect thereto.

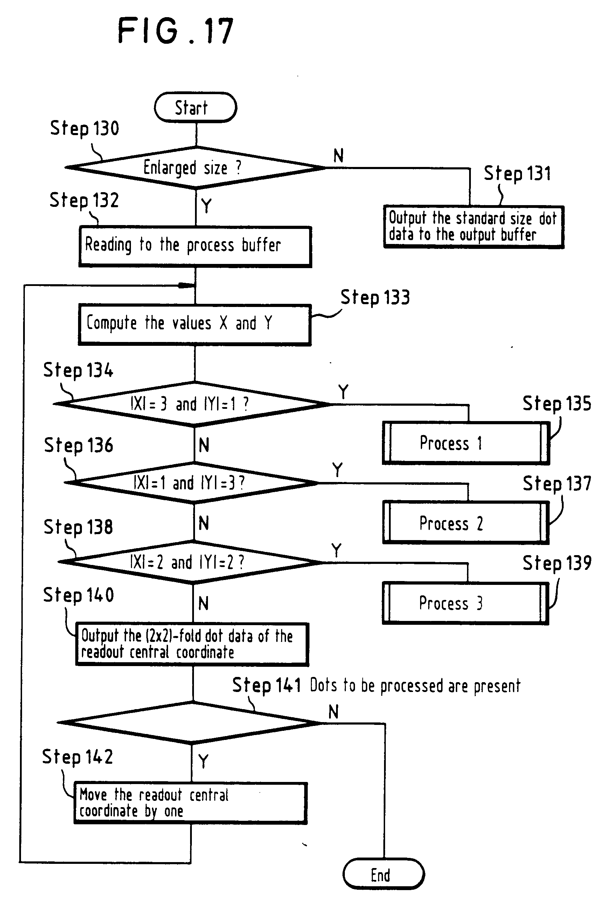

The operations of the thus constructed device will hereinafter be described with reference to flowcharts of FIGS. 17 to 20.

When the character code data outputted from the external unit 2 command a print of the standard size (step 130), the microcomputer 1 accesses the character generator 4 on the basis of the character code data stored into the input buffer 3 and reads out the standard size dot data corresponding to the character codes to the output buffer 5 (step 131). On the basis of the dot data, dot forming elements are operated, thereby printing the standard size characters according to the dot pattern.

On the other hand, if the character code data outputted from the external unit 2 command a print of a size which is, e.g., four times as large as the standard size (step 130), the microcomputer 1 reads out the standard size dot data corresponding to the character codes from the character generator 4 to the process buffer 10 (step 132). From the process buffer 10, the region readout circuit 11 reads the data while deviating the readout coordinate dotwise in the right direction in a predetermined order, for instance, from the left upper corner defined by (i, j) = (0, 0).

Where the readout central coordinate is present at the left upper corner, the values of f(i-1, j-1) + f(i-1, j) + f(i-1, j+1) = X- and f(i+1, j-1) + f(i+1, j) f(i+1), j+1) = X+ are "0", and the values of f(i-1, j+1) + f(i, j+1) + f(i+1, j+1) = Y+ are "0". Hence, the X-value arithmetic circuit 14 and the Y-value arithmetic circuit 15 output the values "0" (step 133). For this reason, the conversion pattern generating circuit 21 jumps over to a step 140, wherein the circuit 21 outputs the values of the dot existence judging circuit 16, i.e., null data of (2 x 2) dots, because no dot is present in this case (step 140). Therefore it follows that the null data constituting the coordinate (i, j) are converted into the (2 x 2) null data. The dot data are still left in this case (step 141), so that the readout central coordinate is moved by one address in the I-direction from the process buffer 10 (step 142), and the above-mentioned steps are repeated.

When the readout central coordinate moves to (i, j) = (2, 1) in this manner (1 in FIG. 3), a pattern depicted in FIG. 13(I) is outputted as a cut-out region. This cut-out pattern, in which the values X and Y are "1", does not correspond to any one of the steps 134, 136 and 138. Then, the conversion pattern generating circuit 21 jumps over to a step 140. In this case also, "0" is outputted from the dot existence judging circuit 16, thereby outputting the (2 x 2) null data (step 140).

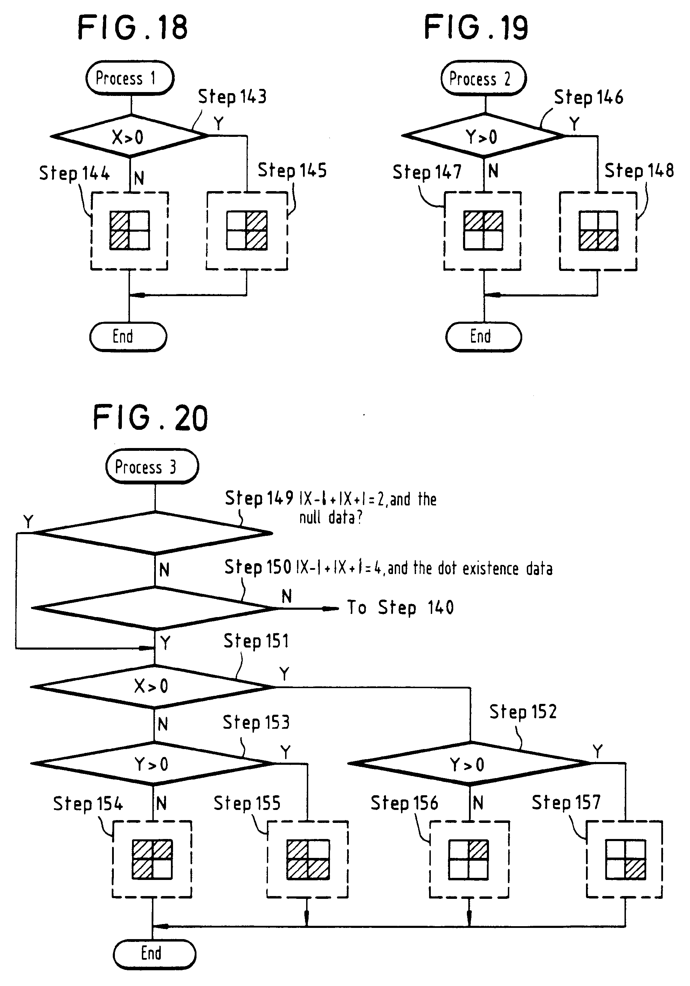

When the central coordinate (i, j) moves to (3, 2) (FIG, 3II), the region readout circuit 11 reads a pattern illustrated in FIG. 13(II). In this pattern, the value X is "2", and the value Y is "2". Hence, the pattern generating circuit 21 jumps to the step 138 and enters the process 3 which is described in detail in FIG. 20. In this case, all the requirements of the steps 149 and 150 are not fulfilled, and therefore the circuit 21 jumps over to 140, wherein (2 x 2)-fold dot existence data "1" are generated on the basis of the values given from the dot existence judging circuit 16 (step 140). Consequently, enlarged data obtained by quadrupling the dot existence data of the readout central coordinate (3, 2).

When the readout central coordinate shifts by one to (4, 2) (FIG. 3III), the region readout circuit 11 behaves to cut out a pattern shown in FIG. 13(III). In this pattern, the value X is "-1", while the value Y is "3". The pattern generating circuit 21 therefore jumps to a step 136 and comes into the process 2 which is fully described in FIG. 19 (step 137). The pattern generating circuit 21 outputs a pattern in which a higher line specified by the step 148 is null, and two dots are provided in a lower line, because the value Y of this pattern is defined such as 3 > 0. Namely, the conversion pattern generating circuit 21 detects a pattern which exhibits a symmetry with respect to that of FIG. 15(c) and outputs a conversion pattern suited to gradually fill up the stepped portions shaped by the front and rear dots, which shows a symmetry with respect to that of FIG. 16(c) corresponding thereto.

When the central coordinates moves to (5, 2) (FIG. 3VI), the region readout circuit 11 cuts out a pattern depicted in FIG. 13IV. The pattern generating circuit 21 jumps to the step 138 and enters the process 3 which is explained in detail in FIG. 20 (step 139), because the value X of that pattern is "-2", while the value Y is "2". In this step, there is made a judgment as to whether the dots forming the readout central coordinate shape an oblique line on the entire character pattern or an intersection (steps 149 and 150). If such dots constitute the intersection, the conversion is hindered by the addition/deletion determining circuit 20, and simply a (2 x 2) pattern is generated (step 140). thereby preventing an imbalance as a whole.

In this pattern (FIG. 3IV), |X-| + |X+| = 2, and the null data "0" is outputted from the dot judging circuit 16. The pattern generating circuit 21 then comes into a step 151 and further subsequent steps. The value X of this pattern is defined such as "-2" < 0 (step 151), while the value Y is defined by "2" > 0 (step 153). Therefore, a pattern indicated by a step 155 is outputted.

When the dot data of the readout central coordinate (i, j) is the null data "0", and in the case of FIGS. 15(a) and 15(b) where dot data "1" exist in two directions thereof, the enlargement is effected in accordance with a pattern to which a single piece of dot existence data is added to, as illustrated in FIGS. 16(a) and 16(b). verge on the dot existence data. When the dot data of the readout central coordinate is identical with the dot existence data "1", and in the case of FIGS. 15(c) and 15(d) where the dot existence data are present in the two directions thereof, the operation is not to perform (2 x 2) basis outputting of the dot existence data but to make an enlargement on the pattern in which the dot existence data verging on the null side is, as in the case of FIGS. 16(c) and 16(d), deleted from the (2 x 2) dot existence data.

In accordance with this embodiment, the object for modification during the enlargement includes not only the null data contiguous to the dot existence data but also the dot existence data verging on the null data. It is therefore possible to obtain a still smoother enlarged pattern owing to a reduction in the stepped portions of the oblique lines when being enlarged.

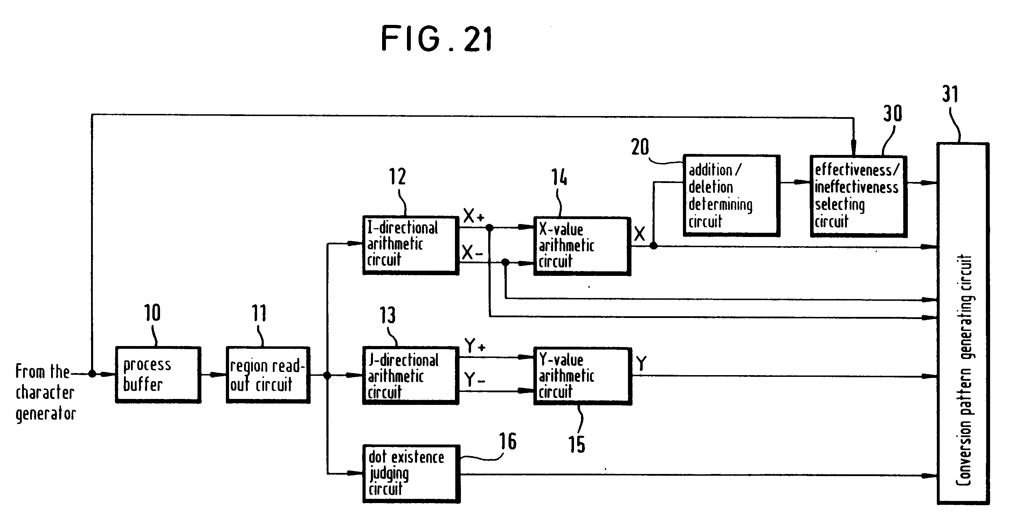

Referring to FIG. 21, there is illustrated a third embodiment of the dot pattern data generating device according to the present invention. In the third embodiment, the pattern data generating unit of the second embodiment shown in FIG. 14 incorporates an addition/deletion determining circuit 20 for elaborately controlling enlargement patterns according to the character types, ordinary characters or Gothic characters.

An effectiveness/ineffectiveness selecting circuit generally indicated at 30 in the Figure acts to judge the character types of the process buffer 10. In the case of the Gothic type character shaped by lines each having a uniform thickness, the data imparted from the addition/deletion circuit 20 are inputted to a conversion pattern generating circuit 31. Whereas in the case of the ordinary character, e. g., a clear-cut style character, formed of the lines the thicknesses of which differ for every line segments, the data given from the addition/deletion circuit 20 are hindered from being inputted to the conversion pattern generating circuit 31.

The conversion pattern generating circuit 31 detects the patterns depicted in FIGS. 15(a) through 15(d) and the patterns which exhibit a point symmetry and linear symmetry with respect thereto among the dot patterns which shape the oblique lines on the basis of the data sent from the I-directional arithmetic circuit 12, the X-value arithmetic circuit 14, the Y-value arithmetic circuit 15, the dot existence judging circuit 16 and the addition/deletion determining circuit 20. Subsequent to this step, the circuit 31 converts the thus detected patterns into patterns framed by heavy lines in FIGS. 16(a) to 16(d) and into patterns which show the point symmetry and linear symmetry with respect thereto.

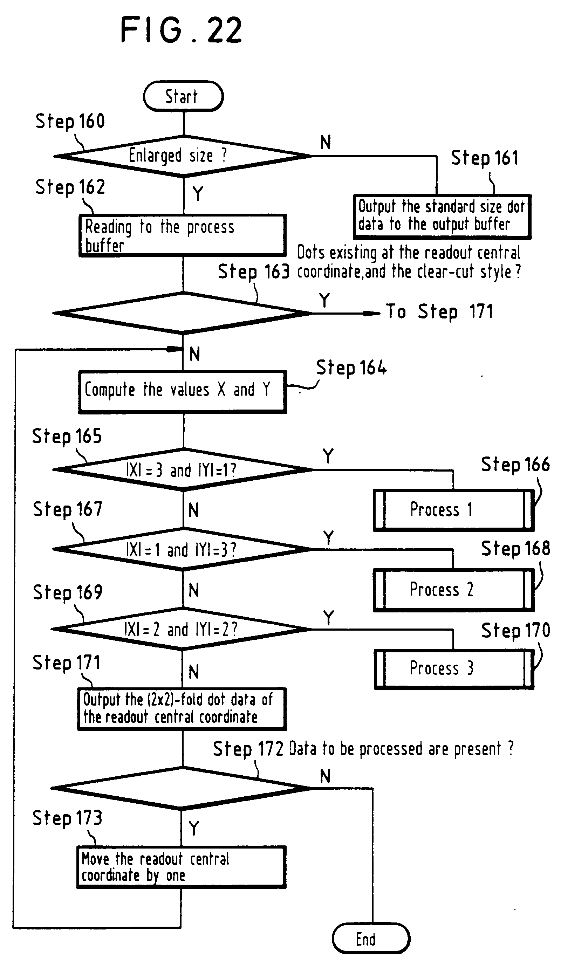

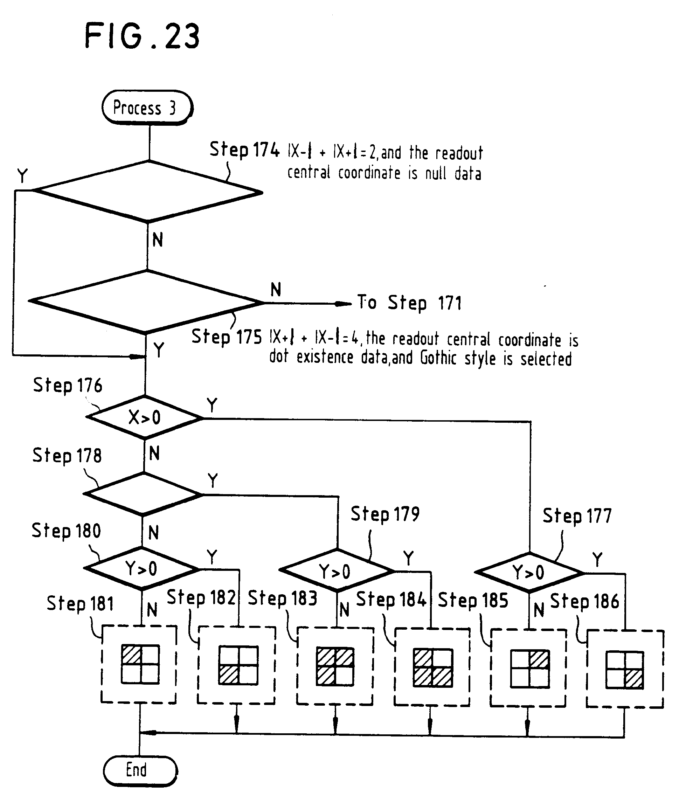

The operations of the thus constructed device will hereinafter be described with reference to flowcharts of FIGS. 22 and 23.

When the character code data outputted from the external unit 2 command a print of the standard size (step 160), the microcomputer 1 accesses the character generator 4 on the basis of the character code data stored into the input buffer 3 and reads out the standard size dot data corresponding to the character codes to the output buffer 5 (step 161). On the basis of the dot data, dot forming elements are operated, thereby printing the standard size characters according to the dot pattern.

On the other hand, if the character code data outputted from the external unit 2 command a print of a size which is, e.g., four times as large as the standard size (step 160), the microcomputer 1 reads out the standard size dot data corresponding to the character codes from the character generator 4 to the process buffer 10 (step 162). From the process buffer 10, the region readout circuit 11 reads the data while deviating the readout coordinate dotwise in the right direction in a predetermined order, for instance, from, e.g., the left upper corner defined by (i, j) = (0, 0).

When the clear-cut style character is outputted to the process buffer 10 in this state, and if the readout central coordinate is present at the left upper corner, it implies the null data (step 163). Hence the conversion pattern generating circuit 31 makes a judgment as to the steps 165, 167 and 169 by which to obtain the values X and Y. Since any requirements are met, the circuit 31 jumps over to a step 171 and outputs the (2 x 2)-fold null data.

Where the readout central coordinate does reach (2, 2), the dot data of the readout central coordinate is identical with the null data "0". However, the values and Y do not correspond to any one of the steps 165, 167 and 169, and hence the conversion pattern generating circuit 31 outputs (2 x 2)-fold null data in the step 171.

When the readout central coordinate moves to (3, 2) (FIG. 3II), a pattern (FIG. 13II) having, as illustrated in FIG. 13II, the dot existence data "1" at the readout central coordinate is cut out from the region readout circuit 11 (step 171). The conversion pattern generating circuit 31 enters the step 171 and outputs a pattern obtained by simply quadrupling the dot existence data "1". If a dot signal appears at the readout central coordinate (step 163), the conversion pattern generating circuit 31 jumps to the step 171 and outputs a (2 x 2)-fold dot existence signal, whereby an enlarged pattern causing no thin part in the lines can be generated.

When the central coordinate shifts to (5, 2) (FIG. 3IV), the region readout circuit 11 cuts out a pattern depicted in FIG. 13IV. The conversion pattern generating circuit 31 jumps to the step 170 and comes into the process 3 which will be described in detail in FIG. 23, because the value of this pattern is identified by "-2˝ and the value Y is "2".

In this pattern, |X-| + |X+| = 2, and the signal "0" is outputted from the dot judging circuit 16, videlicet, no dot exists at the central coordinate (5, 2). As a result, the pattern generating circuit 31 enters a step 178 due to the step 174.

As the clear-cut style character is now being read out (step 178), the conversion pattern generating circuit 31 selects a pattern of a step 182. Consequently, (2 x 2)-fold enlargement of a null area is effect in accordance with the data in which a single piece of dot existence data is supplemented to the null area shaping the stepped portion, thus reducing the stepped portion when being enlarged.

On the other hand, if the Gothic character is selected, a linear width of the enlarged character pattern has to be as uniform as possible. During a correction of the stepped portion, as illustrated in a step 183 or 184 of FIG. 23, there is selected a pattern having as many dots as possible, i.e., the dots at three parts in this embodiment in a content of collapse difference associated with the original pattern. With this arrangement, it is feasible to prevent the lines from being thickened or thinned to the greatest possible degree, thereby generating a pattern of the enlarged Gothic characters having a high quality.

## Claims

1. A device for generating dot pattern data representing characters and/or images formed by a dot pattern of existent and non-existent dots in a dot location matrix, comprising:
a character generator (4) storing for a plurality of characters and/or images respective first dot pattern data defining a respective first size dot pattern in a first dot location matrix having a first size, said character generator selectively outputting said dot pattern data in response to character code data applied to it, and
enlarged dot pattern generating means (10 - 17) for converting the first dot pattern data into second dot pattern data defining an enlarged dot pattern of existing and non-existing dots in a second dot location matrix, each dot location of said first dot location matrix corresponding to a predetermined plurality of dot locations in said second dot location matrix, and a partial pattern indicating presence or absence of a dot at each of said predetermined plurality of dot locations in said second dot location matrix being decided in accordance with the presence or absence of a dot at the associated dot location and neighboring dot locations in said first dot location matrix in such a manner as to smooth stepped portions in said enlarged dot pattern,
characterized in that said enlarged dot pattern generating means comprises:
region readout means (11) for scanning said first dot pattern data by successively defining each dot location in said first dot location matrix as the center of a submatrix, said submatrix comprising a predetermined number of dot locations substantially symmetrically positioned around said center, and for extracting information indicating presence or absence of a dot at the individual positions in said sub-matrix,
X-value/Y-value arithmetic means (12 - 15) responsive to said region readout means (11) for computing X-values based on the number of dots present at dot locations in those columns of said sub-matrix not including the center of the sub-matrix, and Y-values based on the number of dots present at dot locations in those rows of said sub-matrix not including the center of the sub-matrix, a respective group of X and Y values being computed at least for all sub-matrices having no dot existing at their center, and
dot pattern generating means (17) for selecting, in response to each computed group of X and Y values, said partial pattern associated with the center of the corresponding submatrix.

2. The device of claim 1, wherein said submatrix is a 3 x 3 dot location matrix and said X-value/Y-value arithmetic means (12 - 15) computes for each of the outer columns of the submatrix values X⁻ and X⁺, respectively, representing the number of existing dots in the column, for each of the outer rows of the submatrix values Y⁻ and Y⁺, respectively, representing the number of existing dots in the row, an X-value defined as X = X⁺ - X⁻ and an Y-value defined as Y = Y⁺ - Y⁻.

3. The device of claim 1 or 2 , wherein said enlarged dot pattern generating means further comprises addition/deletion determining means (20) sending a signal to said dot pattern generating means for adding to or deleting from the dots of the partial pattern.

4. The device of claim 3, wherein said enlarged dot pattern generating means further comprises character type selecting means (39) for making said addition/deletion determining means (20) effective or ineffective depending on the type of character to be enlarged.

5. A method for converting first dot pattern data representing characters and/or images formed by a first size dot pattern of existent and non-existent dots in a first dot location matrix into second dot pattern data defining an enlarged dot pattern of existing or non-existing dots in a second dot location matrix, wherein each dot location of said first dot location matrix corresponds to a predetermined plurality of dot locations in said second dot location matrix, and a partial pattern indicating presence or absence of a dot at each of said predetermined plurality of dot locations in said second dot location matrix being decided in accordance with the presence or absence of a dot at the associated dot location and neighboring dot locations in said first dot location matrix in such a manner as to smooth stepped portions in said enlarged dot pattern,
characterized by the steps of:
(a) scanning said first dot pattern data by successively defining each dot location in said first dot location matrix as the center of a submatrix, said submatrix comprising a predetermined number of dot locations substantially symmetrically positioned around said center, and extracting from said first dot pattern data information indicating presence or absence of a dot at the individual positions in said submatrix,
(b) computing for at least all sub-matrices having no dot existing at their center a respective group of X and Y values based on the number of dots present at dot locations in the columns and rows, respectively, of said sub-matrix, not including the center of the sub-matrix,
(c) selecting, in response to each computed group of X and Y values, said partial pattern associated with the center of the corresponding submatrix and
(d) outputting said partial patterns as said second dot pattern data.

6. The method of claim 5, wherein said submatrix is a 3 x 3 matrix of dot locations.

7. The method of claim 6, wherein step (b) comprises computing a first value (X⁻) indicating the number of dots existing in one of the outer columns of the submatrix, a second value (X⁺) indicating the number of dots existing in the other outer column, a third value (Y⁻) indicating the number of dots existing in one of the outer rows, a fourth value (Y⁺) indicating the number of dots existing in the other outer row, the difference between said second and first values as a fifth value (X), and the difference between said fourth and third values as a sixth value (Y).

8. The method of any one of claims 5 to 7, wherein said second dot location matrix is four times as large as the first dot location matrix, said predetermined plurality of dot locations in said second dot location matrix corresponding to each dot location of said first dot location matrix being a 2 x 2 matrix of dot locations.

9. The method of claim 7 or 8, wherein in step (c), if a dot does not exist at the dot location of the center of the submatrix, said group of values determine whether one of at least a first, second and third dot supplementing process is initiated, the at least first, second and third dot supplementing processes providing respective partial patterns including a dot at at least one of their dot locations so as to smooth enlarged stepped portions of the first size dot pattern.

10. The method of claim 9, wherein if a dot exists at the dot location at the center of the submatrix, the at least first, second and third dot supplementing processes provide partial patterns having no dot at at least one of the their dot positions so as to smooth enlarged stepped portions of the first size dot pattern.

11. The method of claim 10, further comprising a step of determining the type of character to be enlarged, wherein step (c) comprises smoothing stepped portions by generating dots to form thick oblique lines or thinner oblique lines having fewer dots than the thick lines, based on the character type.

## Patentansprüche

1. Vorrichtung zur Erzeugung von Punktmusterdaten, die Zeichen und/oder Bilder repräsentieren, welche von einem Punktmuster aus vorhandenen und nicht vorhandenen Punkten in einer Punktlagematrix gebildet werden, umfassend:
einen Zeichengenerator (4), der für eine Vielzahl von Zeichen und/oder Bildern jeweilige erste Punktmusterdaten speichert, die ein jeweiliges Punktmuster einer ersten Größe in einer ersten Punktlagematrix mit einer ersten Größe definieren, wobei der Zeichengenerator selektiv die Punktmusterdaten als Antwort auf an ihn angelegte Zeichencodedaten ausgibt, und
eine Generatoreinrichtung (10 - 17) für vergrößerte Punktmuster zur Umwandlung der ersten Punktmusterdaten in zweite Punktmusterdaten, die ein vergrößertes Punktmuster aus existierenden und nicht existierenden Punkten in einer zweiten Punktlagematrix definieren, wobei jede Punktlage der ersten Punktlagematrix einer vorbestimmten Vielzahl von Punktlagen in der zweiten Punktlagematrix entspricht, und ein Teilmuster, das die Anwesenheit oder Abwesenheit eines Punktes an jedem der vorbestimmten Vielzahl von Punktlagen in der zweiten Punktlagematrix angibt, nach Maßgabe der Anwesenheit oder Abwesenheit eines Punktes an der zugehörigen Punktlage und benachbarten Punktlagen in der ersten Punktlagematrix in einer solchen Weise bestimmt wird, daß abgestufte Abschnitte in dem vergrößerten Punktmuster geglättet werden,
dadurch gekennzeichnet, daß die Generatoreinrichtung für ein vergrößertes Punktmuster umfaßt:
eine Bereichsausleseeinrichtung (11) zur Abtastung der ersten Punktmusterdaten dadurch, daß sukzessive jede Punktlage in der ersten Punktlagematrix als der Mittelpunkt einer Teilmatrix definiert wird, wobei die Teilmatrix eine vorbestimmte Anzahl von Punktlagen aufweist, die im wesentlichen symmetrisch um die Mitte herum positioniert sind, und zur Extraktion von Informationen, die die Anwesenheit oder Abwesenheit eines Punktes an den einzelnen Positionen in der Teilmatrix angibt,
X-Wert/Y-Wert-Arithmetikmittel (12 - 15), die auf die Bereichsausleseeinrichtung (11) ansprechen, um X-Werte zu errechnen auf der Basis der Anzahl von Punkten, die an Punktlagen in jenen Spalten der Teilmatrix vorhanden sind, die nicht die Mitte der Teilmatrix enthalten, und von Y-Werten auf der Basis der Anzahl von Punkten, die an Punktlagen in jenen Reihen der Teilmatrix vorhanden sind, die nicht die Mitte der Teilmatrix enthalten, wobei eine jeweilige Gruppe von X- und Y-Werten, zumindest für alle Teilmatrizen errechnet wird, in deren Mitte kein Punkt existiert, und
eine Punktmuster-Generatoreinrichtung (17) zur Auswahl, als Antwort auf jede berechnete Gruppe von X- und Y-Werten, des Teilmusters, das der Mitte der entsprechenden Teilmatrix zugeordnet ist.

2. Vorrichtung nach Anspruch 1, bei der die Teilmatrix eine 3 x 3 Punktlagematrix ist und die X-Wert/Y-Wert-Arithmetikmittel (12 - 15) für jede der äußeren Spalten der Teilmatrix Werte X⁻ bzw. X⁺ berechnen, die die Anzahl existierender Punkte in der Spalte repräsentieren, für jede der äußeren Reihen der Teilmatrix Werte Y⁻ bzw. Y⁺ berechnen, die die Anzahl existierender Punkte in der Reihe darstellen, einen X-Wert, definiert als X = X⁺ - X⁻, und ein Y-Wert, definiert als Y = Y⁺ - Y⁻.

3. Vorrichtung nach Anspruch 1 oder 2, bei der die Generatoreinrichtung für ein vergrößertes Punktmuster ferner eine Hinzufüge/Enffernungs-Bestimmungseinrichtung (20) umfaßt, die an die Punktmuster-Generatoreinrichtung ein Signal zum Hinzufügen zu oder Entfernen von den Punkten des Teilmusters sendet.

4. Vorrichtung nach Anspruch 3, bei der die Generatoreinrichtung für ein vergrößertes Punktmuster ferner eine Zeichentyp-Wähleinrichtung (39) umfaßt, um die Hinzufüge/Entfernungs-Bestimmungseinrichtung (20) abhängig von dem Typ des zu vergrößernden Zeichens effektiv oder ineffetiv zu machen.

5. Verfahren zur Umwandlung erster Punktmusterdaten, die Zeichen und/oder Bilder repräsentieren, welche von einem Punktmuster einer ersten Größe existierender und nicht existierender Punkte in einer ersten Punktlagematrix gebildet werden, in zweite Punktmusterdaten, die ein vergrößertes Punktmuster existierender und nicht existierender Punkte in einer zweiten Punktlagemtrix definieren, wobei jede Punktlage der ersten Punktlagematrix einer vorbestimmten Vielzahl von Punktlagen in der zweiten Punktlagematrix entspricht und ein Teilmuster, das die Anwesenheit oder Abwesenheit eines Punktes an jeder der vorbestimmten Vielzahl von Punktlagen in der zweiten Punktlagematrix anzeigt, nach Maßgabe der Anwesenheit oder Abwesenheit eines Punktes an der zugehörigen Punktlage sowie benachbarter Punktlagen in der ersten Punktlagematrix in einer solchen Weise bestimmt wird, daß abgestufte Abschnitte in dem vergrößerten Punktmuster geglättet werden, gekennzeichnet durch die Schritte:
(a) Abtasten der ersten Punktmusterdaten dadurch, daß sukzessive jede Punktlage in der ersten Punktlagematrix als die Mitte einer Teilmatrix definiert wird, wobei die Teilmatrix eine vorbestimmte Anzahl von Punktlagen, im wesentlichen symmetrisch um die Mitte herum angeordnet, umfaßt, sowie Extrahieren von Informationen von den ersten Punktmusterdaten, die die Anwesenheit oder Abwesenheit eines Punktes an den einzelnen Positionen in der Teilmatrix angibt,
(b) Berechnen für wenigstens alle Teilmatrizen, an deren Mitte kein Punkt existiert, einer jeweiligen Gruppe von X- und Y-Werten auf der Basis der Anzahl von Punkten, die an Punktlagen in den Spalten bzw. Reihen der Teilmatrix vorhanden sind, welche nicht die Mitte der Teilmatrix einschließen,
(c) Auswählen, in Antwort auf jede berechnete Gruppe von X- und Y-Werten, des Teilmusters, das der Mitte der entsprechenden Teilmatrix zugeordnet ist, und
(d) Ausgabe des Teilmusters als die zweiten Punktmusterdaten.

6. Verfahren nach Anspruch 5, bei dem die Teilmatrix eine 3 x 3 Matrix von Punktlagen ist.

7. Verfahren nach Anspruch 6, bei dem Schritt (b) das Berechnen umfaßt von: einem ersten Wert (X⁻), der die Anzahl von Punkten angibt, die in einer der äußeren Spalten der Teilmatrix existieren, einem zweiten Wert (X⁺), der die Anzahl von Punkten angibt, die in der anderen äußeren Spalte existieren, einem dritten Wert (Y⁻), der die Anzahl von Punkten angibt, die in einer der äußeren Reihen existieren, einem vierten Wert (Y⁺), der die Anzahl von Punkten angibt, die in der anderen äußeren Reihe existieren, der Differenz zwischen dem zweiten und dem ersten Wert als einem fünften Wert (X) und der Differenz zwischen dem vierten und dem dritten Wert als einem sechsten Wert (Y).

8. Verfahren nach einem der Ansprüche 5 bis 7, bei dem die zweite Punktlagematrix viermal so groß wie die erste Punktlagematrix ist, wobei die vorbestimmte Vielzahl von Punktlagen in der zweiten Punktlagematrix, die jeder Punktlage in der ersten Punktlagematrix entspricht, eine 2 x 2 Matrix von Punktlagen ist.

9. Verfahren nach Anspruch 7 oder 8, bei dem in Schritt (c), falls kein Punkt an der Punktlage der Mitte der Teilmatrix existiert, die Gruppe von Werten bestimmt, ob einer von wenigstens einem ersten, einem zweiten und einem dritten Punktergänzungsprozeß eingeleitet wird, wobei der wenigstens erste, zweite und dritte Punktergänzungsprozeß jeweilige Teilmuster liefert, die einen Punkt an wenigstens einer ihrer Punktlagen enthalten, um vergrößerte abgestufte Abschnitte des Punktmusters der ersten Größe zu glätten.

10. Verfahren nach Anspruch 9, bei dem, falls ein Punkt an der Punktage der Mitte der Teilmatrix existiert, der wenigstens erste, zweite und dritte Punktergänzungsprozeß Teilmuster liefert, die keinen Punkt an wenigstens einer ihrer Punktlagen aufweisen, um vergrößerte abgestufte Abschnitte des Punktmusters der ersten Größe zu glätten.

11. Verfahren nach Anspruch 10, ferner umfassend einen Schritt der Bestimmung des Typs eines zu vergrößernden Zeichens, wobei Schritt (c) das Glätten abgestufter Abschnitte umfaßt, dadurch, daß Punkte zur Bildung dicker schräger Linien oder dünner schräger Linien, die weniger Punkte als die dicken Linien aufweisen, auf der Basis des Zeichentyps erzeugt werden.

## Revendications

1. Un dispositif pour générer des données de configurations de points représentant des caractères et/ou des images formés par une configuration de points qui est constituée par des points existants et des points non existants dans une matrice de position de points, comprenant :
un générateur de caractères (4) qui enregistre pour un ensemble de caractères et/ou d'images, des premières données de configurations de points respectives, définissant une configuration de points respective d'une première taille dans une première matrice de positions de points ayant une première taille, ce générateur de caractères émettant sélectivement les données de configurations de points sous la dépendance de données de codes de caractères qui lui sont appliquées, et
des moyens de génération de configurations de points agrandies (10-17) pour convertir les premières données de configurations de points en secondes données de configurations de points définissant une configuration de points agrandie constituée par des points existants et non existants dans une seconde matrice de positions de points, chaque position de point de la première matrice de positions de points correspondant à un ensemble prédéterminé de positions de points dans la seconde matrice de positions de points, et une configuration partielle indiquant la présence ou l'absence d'un point à chaque position de l'ensemble prédéterminé de positions de points dans la seconde matrice de positions de points étant déterminée conformément à la présence ou à l'absence d'un point à la position de point associée et aux positions de points voisines dans la première matrice de positions de points, de manière à lisser des parties en escalier dans la configuration de points agrandie,
caractérisé en ce que les moyens de génération de configurations de points agrandies comprennent :
des moyens de lecture de région (11) pour balayer les premières données de configurations de points en définissant successivement chaque position de point dans la première matrice de positions de points comme le centre d'une sous-matrice, cette sous-matrice comprenant un nombre prédéterminé de positions de points qui sont positionnées de façon pratiquement symétrique par rapport au centre, et pour extraire une information indiquant la présence ou l'absence d'un point aux positions individuelles dans cette sous-matrice,
des moyens arithmétiques de calcul de valeur X/valeur Y (12-15), fonctionnant sous la dépendance des moyens de lecture de région (11) pour calculer des valeurs X basées sur le nombre de points présents à des positions de points dans les colonnes de la sous-matrice qui ne contiennent pas le centre de la sous-matrice, et des valeurs Y basées sur le nombre de points présents dans des positions de points dans les lignes de la sous-matrice qui ne contiennent pas le centre de la sous-matrice, un groupe respectif de valeurs X et Y étant calculé au moins pour toutes les sous-matrices au centre desquelles il n'existe pas de point, et
des moyens de génération de configurations de points (17) pour sélectionner, sous la dépendance de chaque groupe calculé de valeurs X et Y, la configuration partielle qui est associée au centre de la sous-matrice correspondante.

2. Le dispositif de la revendication 1, dans lequel la sous-matrice est une matrice de 3 x 3 positions de points, et les moyens arithmétiques de calcul de valeur X/valeur Y (12-15) calculent pour chacune des colonnes extérieures de la sous-matrice, des valeurs respectives X⁻ et X⁺ représentant le nombre de points existants dans la colonne, et pour chacune des lignes extérieures de la sous-matrice, des valeurs respectives Y⁻ et Y⁺ représentant le nombre de points existants dans la ligne, une valeur X étant définie par la relation X = X⁺ - X⁻ et une valeur Y étant définie par la relation Y = Y⁺ - Y⁻.

3. Le dispositif de la revendication 1 ou 2, dans lequel les moyens de génération de configurations de points agrandies comprennent en outre des moyens de détermination d'ajout/suppression (20) qui émettent un signal vers les moyens de génération de configurations de points pour ajouter des points à la configuration partielle ou pour supprimer des points de celle-ci.

4. Le dispositif de la revendication 3, dans lequel les moyens de génération de configurations de points agrandies comprennent en outre des moyens de sélection de type de caractère (39) pour mettre en fonction ou hors fonction les moyens de détermination d'ajout/suppression (20), sous la dépendance du type de caractère à agrandir.

5. Un procédé pour convertir des premières données de configurations de points représentant des caractères et/ou des images formés par une configuration de points d'une première taille constituée par des points existants et non existants dans une première matrice de positions de points, pour fournir des secondes données de configurations de points définissant une configuration de points agrandie constituée par des points existants ou non existants dans une seconde matrice de positions de points, dans lequel chaque position de point de la première matrice de positions de points correspond à un ensemble prédéterminé de positions de points dans la seconde matrice de positions de points, et une configuration partielle indiquant la présence ou l'absence d'un point à chaque position de l'ensemble prédéterminé de positions de points dans la seconde matrice de positions de points étant déterminée conformément à la présence ou à l'absence d'un point à la position de point associée et à des positions de points voisines dans la première matrice de positions de points, de manière à lisser des parties en escalier dans la configuration de points agrandie, caractérisé par les étapes suivantes :
(a) on balaie les premières données de configurations de points en définissant successivement chaque position de point dans la première matrice de positions de points comme le centre d'une sous-matrice, cette sous-matrice comprenant un nombre prédéterminé de positions de points qui sont placées de façon pratiquement symétrique par rapport au centre, et on extrait des premières données de configurations de points une information indiquant la présence ou l'absence d'un point aux positions individuelles dans la sous-matrice,
(b) on calcule pour au moins toutes les sous-matrices n'ayant pas de point existant à leur centre, un groupe respectif de valeurs X et Y basées sur le nombre de points présents à des positions de points respectivement dans les colonnes et dans les lignes de la sous-matrice, ne comprenant pas le centre de la sous-matrice,
(c) sous la dépendance de chaque groupe calculé de valeurs X et Y, on sélectionne la configuration partielle qui est associée au centre de la sous-matrice correspondante, et
(d) on émet les configurations partielles sous la forme des secondes données de configurations de points.

6. Le procédé de la revendication 5, dans lequel la sous-matrice est une matrice de 3 x 3 positions de points.

7. Le procédé de la revendication 6, dans lequel l'étape (b) comprend le calcul d'une première valeur (X⁻) indiquant le nombre de points qui existent dans l'une des colonnes extérieures de la sous-matrice, une seconde valeur (X⁺) indiquant le nombre de points qui existent dans l'autre colonne extérieure, une troisième valeur (Y⁻) indiquant le nombre de points qui existent dans l'une des lignes extérieures, une quatrième valeur (Y⁺) indiquant le nombre de points qui existent dans l'autre ligne extérieure, une cinquième valeur (X) qui est la différence entre les seconde et première valeurs, et une sixième valeur (Y) qui est la différence entre les troisième et quatrième valeurs.

8. Le procédé de l'une quelconque des revendications 5 à 7, dans lequel la seconde matrice de positions de points est quatre fois plus grande que la première matrice de positions de points, l'ensemble prédéterminé de positions de points dans la seconde matrice de positions de points correspondant à chaque position de point de la première matrice de positions de points consistant en une matrice de positions de points de 2 x 2.

9. Le procédé de la revendication 7 ou 8, dans lequel à l'étape (c), si un point n'existe pas à la position de point du centre de la sous-matrice, le groupe de valeurs précité détermine si un processus parmi au moins un premier, un second et un troisième processus d'ajout de point est déclenché, les premier, second et troisième processus d'ajout de point, au moins, produisant des configurations partielles respectives qui comprennent un point dans l'une au moins de leurs positions de points, de façon à lisser des parties en escalier agrandies de la configuration de points de la première taille.

10. Le procédé de la revendication 9, dans lequel si un point existe à la position de point se trouvant au centre de la sous-matrice, les premier, second et troisième processus d'ajout de point, au moins, produisent des configurations partielles n'ayant pas de point à l'une au moins de leurs positions de points, de façon à lisser des parties en escalier agrandies de la configuration de points de la première taille.

11. Le procédé de la revendication 10, comprenant en outre une étape de détermination du type de caractère à agrandir, dans lequel l'étape (c) comprend le lissage de parties en escalier par la génération de points pour former des lignes obliques épaisses ou des lignes obliques plus minces ayant moins de points que les lignes épaisses, sur la base du type de caractère.
